# EUROPEAN PATENT APPLICATION

(11) **EP 4 712 443 A1**
(43) Date of publication of application: **18.03.2026**
(21) Application number: 23936880.6
(22) Date of filing: 12.05.2023
(51) Int. Cl.: H04L 67/12, H04W 4/08

(54) **PERSONAL IOT NETWORK (PIN) SERVICE RULE GENERATION METHOD, AND APPARATUS**

(71) Applicant: Beijing Xiaomi Mobile Software Co., Ltd., Beijing 100085 (CN)
(72) Inventor: LIU, Jianning, Beijing 100085 (CN)
(74) Representative: Dehns Germany Partnerschaft mbB
(86) International application number: PCT/CN2023/094067
(87) International publication number: WO 2024/234190

(57) **Abstract**

The present disclosure provides a personal IoT network (PIN) service rule generation method, and an apparatus. The method comprises: a first network element determining PIN information, wherein the PIN information comprises at least one of a PIN identifier and an external group identifier; and generating a user equipment route selection policy (URSP) rule of a PIN service according to the PIN information. Thus, a first network element is supported to generate a URSP rule of a PIN service according to at least one of a PIN identifier and an external group identifier, such that the URSP rule of the PIN service can be dynamically generated.

## Description

### TECHNICAL FIELD

The present disclosure relates to the field of communication technologies, and in particular relates to a method and an apparatus for generating a rule for a Personal IoT Network (PIN) service.

### BACKGROUND

A PIN consists of PIN elements that communicate using a direct PIN connection or a direct network connection, and is managed locally (using PIN elements with management capability).

### SUMMARY

The present disclosure provides a method and an apparatus for generating a rule for a PIN service.

According to a first aspect of embodiments of the present disclosure, a method for generating a rule for a PIN service is provided, performed by a first network element and including: determining PIN information, where the PIN information includes at least one of a PIN identifier or an external group identifier; and generating a user equipment route selection policy (URSP) rule for the PIN service according to the PIN information. The first network element is a policy control function (PCF).

In the above embodiments, the first network element determines PIN information, where the PIN information includes at least one of a PIN identifier or an external group identifier; and generates a URSP rule for the PIN service according to the PIN information. Therefore, the first network element may generate the URSP rule for the PIN service according to at least one of the PIN identifier or the external group identifier, thus enabling dynamic generation of the URSP rule for the PIN service.

According to a second aspect of embodiments of the present disclosure, a method for generating a rule for a PIN service is provided, performed by an application function (AF) and including: sending PIN information to a first network element, where the PIN information includes at least one of a PIN identifier or an external group identifier.

According to a third aspect of embodiments of the present disclosure, a method for generating a rule for a PIN service is provided, performed by a unified data repository (UDR) and including: sending PIN information to a first network element, where the PIN information includes at least one of a PIN identifier or an external group identifier.

According to a fourth aspect of embodiments of the present disclosure, a communication device is provided, which includes a processing module configured to determine PIN information, where the PIN information includes at least one of a PIN identifier or an external group identifier. The processing module is further configured to generate a URSP rule for a PIN service according to the PIN information.

According to a fifth aspect of embodiments of the present disclosure, another communication device is provided, which includes a transceiver module configured to send PIN information to a first network element, where the PIN information includes at least one of a PIN identifier or an external group identifier.

According to a sixth aspect of embodiments of the present disclosure, yet another communication device is provided, which includes a transceiver module configured to send PIN information to a first network element, where the PIN information includes at least one of a PIN identifier or an external group identifier.

According to a seventh aspect of embodiments of the present disclosure, still another communication device is provided, which includes one or more processors. The processors are configured to invoke instructions to cause the communication device to perform the method for generating the rule for the PIN service according to any one of the first, second, and third aspects.

According to an eighth aspect of embodiments of the present disclosure, a communication system is provided, which includes a first network element configured to perform the method for generating the rule for the PIN service according to the first aspect, an AF configured to perform the method for generating the rule for the PIN service according to the second aspect, and a UDR configured to perform the method for generating the rule for the PIN service according to the second aspect.

According to a ninth aspect of embodiments of the present disclosure, a storage medium is provided, which has stored therein instructions that, when executed on a communication device, cause the communication device to perform the method for generating the rule for the PIN service according to any one of the first, second, and third aspects.

### BRIEF DESCRIPTION OF THE DRAWINGS

These and/or additional aspects and advantages of the present disclosure will become apparent and readily appreciated from the following descriptions of the embodiments made with reference to the drawings, in which:
FIG. 1 is a schematic diagram of the architecture of some communication systems provided in an embodiment of the present disclosure;
FIG. 2 is a schematic diagram of the interaction flow of a method for generating a rule for a PIN service provided in an embodiment of the present disclosure;
FIG. 3 is a flowchart of a method for generating a rule for a PIN service provided in an embodiment of the present disclosure;
FIG. 4 is a flowchart of another method for generating a rule for a PIN service provided in an embodiment of the present disclosure;
FIG. 5 is a flowchart of a method for configuring a rule for a PIN service provided in an embodiment of the present disclosure;
FIG. 6 is a flowchart of yet another method for generating a rule for a PIN service provided in an embodiment of the present disclosure;
FIG. 7 is a flowchart of another method for configuring a rule for a PIN service provided in an embodiment of the present disclosure;
FIG. 8 is a flowchart of still another method for generating a rule for a PIN service provided in an embodiment of the present disclosure;
FIG. 9 is a schematic block diagram of a communication device provided in an embodiment of the present disclosure;
FIG. 10 is a schematic block diagram of another communication device provided in an embodiment of the present disclosure;
FIG. 11 is a schematic block diagram of yet another communication device provided in an embodiment of the present disclosure;
FIG. 12 is a schematic block diagram of still another communication device provided in an embodiment of the present disclosure;
FIG. 13 is a schematic block diagram of a chip provided in an embodiment of the present disclosure.

### DETAILED DESCRIPTION

The method in the present disclosure may be used to solve the technical problem of "how a terminal determines resources on which information indicating the usage status of a transmission occasion (TO) is sent".

Embodiments of the present disclosure provide a method and an apparatus for generating a rule for a PIN service.

In a first aspect, embodiments of the present disclosure provide a method for generating a rule for a PIN service, performed by a first network element and including: determining PIN information, where the PIN information includes at least one of a PIN identifier or an external group identifier; and generating a URSP rule for the PIN service according to the PIN information.

In the above embodiments, the first network element determines PIN information, where the PIN information includes at least one of a PIN identifier or an external group identifier; and generates a URSP rule for the PIN service according to the PIN information. Therefore, the first network element may generate the URSP rule for the PIN service according to at least one of the PIN identifier or the external group identifier, thus enabling dynamic generation of the URSP rule for the PIN service.

In combination with some embodiments of the first aspect, in some embodiments, the method further includes: sending the URSP rule for the PIN service to a terminal.

In the above embodiments, the first network element may send the URSP rule for the PIN service to the terminal, so that the terminal may obtain the URSP rule for the PIN service and apply the URSP rule for the PIN service in subsequent communication processes.

In combination with some embodiments of the first aspect, in some embodiments, sending, by the first network element, the URSP rule for the PIN service to the terminal includes: sending the URSP rule for the PIN service to the terminal via an access and mobility management function (AMF).

In combination with some embodiments of the first aspect, in some embodiments, determining, by the first network element, the PIN information includes at least one of: receiving the PIN information sent by a UDR, or receiving the PIN information sent by an AF.

In the above embodiments, the first network element may receive the PIN information sent by the UDR and/or the AF, thereby determining the PIN information to further generate the URSP rule for the PIN service.

In combination with some embodiments of the first aspect, in some embodiments, receiving, by the first network element, the PIN information sent by the AF includes: receiving the PIN information sent by the AF via a network exposure function (NEF).

In combination with some embodiments of the first aspect, in some embodiments, the first network element sends the URSP rule for the PIN service to the AF.

In the above embodiments, the first network element may send the URSP rule for the PIN service to the AF, so that the AF may obtain the URSP rule for the PIN service and apply the URSP rule for the PIN service in subsequent communication processes.

In combination with some embodiments of the first aspect, in some embodiments, sending, by the first network element, the URSP rule for the PIN service to the AF includes: sending the URSP rule for the PIN service to the AF via an NEF.

In a second aspect, embodiments of the present disclosure provide a method for generating a rule for a PIN service, performed by an AF and including: sending PIN information to a first network element, where the PIN information includes at least one of a PIN identifier or an external group identifier.

In the above embodiments, the AF sends PIN information to a first network element, where the PIN information includes at least one of a PIN identifier or an external group identifier. Therefore, the AF may send at least one of the PIN identifier or the external group identifier to the first network element to dynamically generate the URSP rule for the PIN service at the first network element.

In combination with some embodiments of the second aspect, in some embodiments, sending, by the AF, the PIN information to the first network element includes: sending the PIN information to the first network element via an NEF.

In combination with some embodiments of the second aspect, in some embodiments, the AF sends the PIN information to a UDR.

In combination with some embodiments of the second aspect, in some embodiments, the AF receives a URSP rule for the PIN service sent by the first network element.

In the above embodiments, the AF may receive the URSP rule for the PIN service sent by the first network element, so that the AF may obtain the URSP rule for the PIN service and apply the URSP rule for the PIN service in subsequent communication processes.

In combination with some embodiments of the second aspect, in some embodiments, receiving, by the AF, the URSP rule for the PIN service sent by the first network element includes: receiving the URSP rule for the PIN service sent by the first network element via an NEF.

In a third aspect, embodiments of the present disclosure provide a method for generating a rule for a PIN service, performed by a UDR and including: sending PIN information to a first network element, where the PIN information includes at least one of a PIN identifier or an external group identifier.

In the above embodiments, the UDR sends PIN information to a first network element, where the PIN information includes at least one of a PIN identifier or an external group identifier. Therefore, the UDR may send at least one of the PIN identifier or the external group identifier to the first network element to dynamically generate the URSP rule for the PIN service at the first network element.

In combination with some embodiments of the third aspect, in some embodiments, the UDR receives the PIN information sent by an AF.

In a fourth aspect, embodiments of the present disclosure provide a communication device, which is applied to a first network element and includes a processing module configured to determine PIN information, where the PIN information includes at least one of a PIN identifier or an external group identifier. The processing module is further configured to generate a URSP rule for a PIN service according to the PIN information.

In a fifth aspect, embodiments of the present disclosure provide another communication device, which is applied to an AF and includes a transceiver module configured to send PIN information to a first network element, where the PIN information includes at least one of a PIN identifier or an external group identifier.

In a sixth aspect, embodiments of the present disclosure provide yet another communication device, which is applied to a UDR and includes a transceiver module configured to send PIN information to a first network element, where the PIN information includes at least one of a PIN identifier or an external group identifier.

In a seventh aspect, embodiments of the present disclosure provide still another communication device, which includes one or more processors and one or more memories for storing instructions. The processors are configured to invoke the instructions to cause the communication device to perform the method for generating the rule for the PIN service described in optional implementations of the first, second, and third aspects.

In an eighth aspect, embodiments of the present disclosure provide a communication system, which includes a first network element configured to perform the method for generating the rule for the PIN service according to the first aspect, an AF configured to perform the method for generating the rule for the PIN service according to the second aspect, and a UDR configured to perform the method for generating the rule for the PIN service according to the second aspect.

In a ninth aspect, embodiments of the present disclosure provide a storage medium, which has stored therein instructions that, when executed on a communication device, cause the communication device to perform the method for generating the rule for the PIN service according to any one of the first, second, and third aspects.

In a tenth aspect, embodiments of the present disclosure provide a program product that, when executed on a communication device, causes the communication device to perform the method described in any optional implementation of the first, second, and third aspects.

In an eleventh aspect, embodiments of the present disclosure provide a computer program that, when run on a computer, causes the computer to perform the method described in any optional implementation of the first, second, and third aspects.

It may be understood that the communication device, the communication system, the storage medium, the program product, and the computer program which are mentioned above are all configured to execute the methods provided in the embodiments of the present disclosure. Therefore, regarding the beneficial effects they may achieve, reference may be made to the beneficial effects of the corresponding methods, which will not be repeated here.

The embodiments of the present disclosure provide a method and an apparatus for generating a rule for a PIN service. In some embodiments, terms such as a method for generating a rule for a PIN service, an information processing method, and a communication method may be used interchangeably; terms such as an apparatus for generating a rule for a PIN service, an information processing apparatus, and a communication apparatus may be used interchangeably; and terms such as an information processing system, and a communication system may be used interchangeably.

The embodiments of the present disclosure are not exhaustive, but are merely illustrative of some embodiments, and are not intended to limit the scope of protection of the present disclosure. Unless there is any contradiction, each step in a particular embodiment may be implemented as an independent embodiment, and the steps may be arbitrarily combined. For example, the solution after removing some steps in a particular embodiment may also be implemented as an independent embodiment, and the order of the steps in a particular embodiment may be arbitrarily interchanged. In addition, the optional implementations in a particular embodiment may be arbitrarily combined. Furthermore, the embodiments may be arbitrarily combined. For example, some or all steps in different embodiments may be arbitrarily combined, and a particular embodiment may be arbitrarily combined with optional implementations of other embodiments.

In each embodiment of the present disclosure, unless otherwise specified or contradicted by logic, the terms and/or descriptions between the embodiments are consistent and may be referenced by each other. The technical features in different embodiments may be combined based on their inherent logical relationships to form a new embodiment.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "above", "said", "above-mentioned", "this", or the like, may mean "one and only one", "one or more", "at least one", or the like. For example, when an article such as "a", "an", and "the" in English in translation is used, the noun following the article may be understood as a singular expression or a plural expression.

In the embodiments of the present disclosure, "a plurality of' refers to two or more.

The descriptions in the embodiments of the present disclosure such as "at least one of A, B, C..." or "A and/or B and/or C..." include the case where any one of A, B, C... exists alone, as well as the case where any combination of any multiple of A, B, C... exists. Each case may exist alone. For example, "at least one of A, B, or C" includes the cases of A alone, B alone, C alone, a combination of A and B, a combination of A and C, a combination of B and C, and a combination of A and B and C. For example, A and/or B includes the cases of A alone, B alone, and a combination of A and B.

In some embodiments, the descriptions such as "in one case A, in another case B" or "in response to one case A, in response to another case B" may include the following technical solutions depending on the situations: A is executed independently from B, i.e., A is executed in some embodiments; B is executed independently from A, i.e., B is executed in some embodiments; A and B are selectively executed, i.e., A and B are selectively executed in some embodiments; and A and B are both executed, i.e., A and B are executed in some embodiments. The same applies when there are more branches such as A, B, and C.

The prefixes such as "first" and "second" in the embodiments of the present disclosure are only used to distinguish different described objects and do not constitute any restrictions on the position, order, priority, quantity or content of the described objects. For the statement of the described objects, reference is made to the description in the context of the claims or embodiments, and no unnecessary restrictions should be constituted due to the use of prefixes. For example, if the described object is a "field", the ordinal numbers preceding the "fields" in a "first field" and a "second field" do not limit the position or order of the "fields". "First" and "second" do not limit whether the "fields" they modify are in the same message, nor do they limit the order of the "first field" and "second field". For another example, if the described object is "level", then the ordinal numbers preceding the "levels" in a "first level" and a "second level" do not restrict the priority between "levels". For another example, the number of the described objects is not limited by ordinal numbers and may be one or more. Taking a "first device" as an example, the number of "devices" may be one or more. In addition, the objects modified by different prefixes may be the same or different. For example, if the described object is a "device", then the "first device" and the "second device" may be the same device or different devices, and the types of the "first device" and the "second device" may be the same or different; for another example, if the described object is "information", then "first information" and "second information" may be the same information or different information, and the contents of the "first information" and the "second information" may be the same or different.

In some embodiments, "including A," "comprising A," "indicating A," and "carrying A" may be interpreted as directly carrying A or indirectly indicating A.

In some embodiments, terms such as "in response to...," "in response to determining...," "in the case of...," "at the time of...," "when...," "if...," "in a case where...," and the like may be used interchangeably.

In some embodiments, devices and the like may be interpreted as physical or virtual, and their names are not limited to the names described in the embodiments. Terms such as "apparatus", "equipment", "device", "circuit", "network element", "node", "function", "unit", "section" , "system", "network", "chip", "chip system", "entity", and "body" may be used interchangeably.

In some embodiments, terms such as "access network device (AN device)", "radio access network device (RAN device)", "base station (BS)", "radio base station", "fixed station", "node", "access point", "transmission point (TP)", "reception point (RP)", "transmission/reception point (TRP)", "panel", "antenna panel", "antenna array" " "cell", "macro cell", "small cell", "femto cell", "pico cell", "sector", "cell group", "carrier", "component carrier", and "bandwidth part (BWP)" may be used interchangeably.

In some embodiments, terms such as terminal, terminal device, user equipment (UE), user terminal, mobile station (MS), mobile terminal (MT), subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, and client may be used interchangeably.

In some embodiments, an access network device, a core network device, or a network device may be replaced by a terminal. For example, the various embodiments of the present disclosure may also be applied to a structure in which the communication between a terminal and an access network device, a core network device, or a network device is replaced by the communication between multiple terminals (for example, also referred to as device-to-device (D2D) communication, vehicle-to-everything (V2X) communication, or the like). In this case, the terminal may be configured to have all or some of the functions of the access network device. Furthermore, the words such as "uplink" and "downlink" may be replaced with words corresponding to an inter-terminal communication (e.g., "side"). For example, an uplink channel, a downlink channel, and the like may be replaced by a side channel, and an uplink, a downlink, and the like may be replaced by a side link.

In some embodiments, the terminal may be replaced by an access network device, a core network device, or a network device. In this case, the access network device, the core network device, or the network device may also be configured to have all or some of the functions of the terminal.

In some embodiments, terms such as "radio," "wireless," "radio access network (RAN)," "access network (AN)," "RAN-based" and the like may be used interchangeably.

In some embodiments, "acquiring," "obtaining," "getting," "receiving," "transmitting," "bidirectional transmission," and "sending and/or receiving" may be used interchangeably and may be interpreted as receiving from other entities, obtaining from protocols, processing and obtaining on its/their own, autonomously implementing, or other meanings.

In some embodiments, terms such as "sending," "emitting," "reporting," "issuing," "transmitting," "bidirectional transmission," and "sending and/or receiving" may be used interchangeably.

In some embodiments, determining may be interpreted as judging, deciding, judging, calculating, computing, processing, deriving, investigating, seeking, looking up, searching, querying, ascertaining, receiving, transmitting, inputting, outputting, accessing, resolving, selecting, choosing, establishing, comparing, assuming, expecting, considering, broadcasting, notifying, communicating, forwarding, configuring, reconfiguring, allocating, mapping, assigning, and the like, but is not limited thereto.

In some embodiments, the determining or judging may be performed by a value represented by 1 bit (0 or 1), or by a true or false value (Boolean value) represented by true or false, or by comparison of numerical values (for example, comparison with a predetermined value), but is not limited thereto.

In some embodiments, the "network" may be interpreted as devices included in the network (e.g., an access network device, a core network device, or the like).

In some embodiments, obtaining data, information, and the like may comply with the laws and regulations of the country where the data, information, and the like are obtained.

In some embodiments, data, information, and the like may be obtained with the consent of the user.

In addition, each element, each row, or each column in the table in the embodiments of the present disclosure may be implemented as an independent embodiment, and the combination of any elements, any rows, and any columns may also be implemented as an independent embodiment.

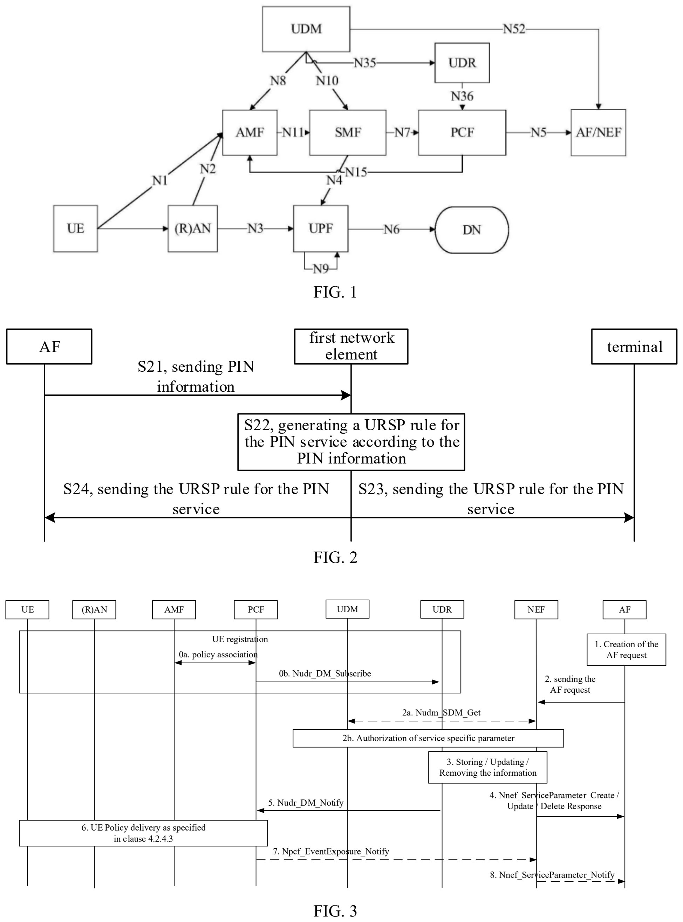

To facilitate the understanding of the embodiments of the present disclosure, a network architecture applicable to the embodiments of the present disclosure is first described in detail with reference to FIG. 1.

FIG. 1 is a schematic diagram of the network architecture applicable to the methods provided in the embodiments of the present disclosure. As shown in FIG. 1, the network architecture is, for example, the 5th generation (5G) networking architecture defined by the 3rd Generation Partnership Project (3GPP). For example, the network architecture may include, but is not limited to, a user equipment (UE), an access network (AN), an access and mobility management function (AMF), a session management function (SMF) network element, a user plane function (UPF), a policy control function (PCF), a unified data management (UDM), a unified data repository (UDR), an application function (AF) or a network exposure function (NEF), a data network (DN), and the like.

A brief introduction to the network functions shown in FIG. 1 is as follows.
1. Terminal: A terminal may be referred to as a user equipment (UE), an access terminal, a subscriber unit, a subscriber station, a mobile, a mobile station (MS), a mobile terminal (MT), a remote station, a remote terminal, a mobile device, a user terminal, a terminal device, a wireless communication device, a user agent, or a user device. The terminal may be a device that provides voice/data connectivity to a user, such as a handheld device with wireless connectivity, a vehicle-mounted device, or the like. Currently, examples of such terminals include mobile phones, tablets, computers with wireless transceiver functions (such as laptops and palmtops), mobile internet devices (MIDs), virtual reality (VR) devices, augmented reality (AR) devices, wireless terminals in industrial control, wireless terminals in self-driving, wireless terminals in remote medical care, wireless terminals in smart grids, wireless terminals in transportation safety, wireless terminals in smart cities, wireless terminals in smart homes, cellular phones, cordless phones, session initiation protocol (SIP) phones, wireless local loop (WLL) stations, personal digital assistants (PDAs), handheld devices with wireless communication functions, computing devices or other processing devices connected to a wireless modem, vehicle-mounted devices, wearable devices, terminals in a 5G network (such as terminals in a 5G local area network), terminals in a future evolved public land mobile network (PLMN), and the like.

In addition, the terminal may also be a terminal in an Internet of Things (IoT) system. The IoT is an important part of the future development of information technologies. The main technical feature of IoT technologies is to connect objects to the network by communication technologies, thereby realizing an intelligent network that interconnects people and machines and interconnects things. IoT technologies may achieve massive connectivity, deep coverage, and low power consumption on terminals by technologies such as narrowband (NB) technologies.

In addition, the terminal may also include sensors such as smart printers, train detectors, and gas stations. The main functions of the terminal include collecting data (some of the terminals), receiving control information and downlink data from the network device, and sending electromagnetic waves to transmit uplink data to the network device.

It should be understood that the terminal may be any device that may access the network. The terminal and the access network device may communicate with each other using certain air interface technologies.

Optionally, the terminal may be configured to act as a base station. For example, the terminal may act as a scheduling entity, providing sidelink signals between terminals in V2X, D2D, or the like. For example, cellular phones and cars communicate with each other using sidelink signals. Cellular phones and smart home devices communicate with each other without relaying communication signals via a base station.

2. Access network (AN): The access network may provide network access functionality for authorized users in a specific area, including radio access network (RAN) devices and AN devices. The RAN devices are mainly 3GPP network wireless network devices, and the AN devices may be access network devices defined by non-3GPP.

The access network may be an access network that uses different access technologies. There are currently two types of wireless access technologies: 3GPP access technologies (such as those used in 3rd generation (3G), 4th generation (4G), or 5G systems) and non-3GPP access technologies. The 3GPP access technologies refer to access technologies that comply with 3GPP standard specifications. For example, the access network device in the 5G system is called the next generation Node Base station (gNB) or RAN. The non-3GPP access technologies refer to access technologies that do not comply with 3GPP standard specifications. Examples include air interface technologies represented by access points (APs) in wireless fidelity (Wi-Fi), worldwide interoperability for microwave access (WiMAX) technologies, and code division multiple access (CDMA) networks. The access network device (AN device) allows terminals and the 3GPP core network to interconnect and communicate using non-3GPP technologies.

An access network that implements access network functions based on wireless communication technologies may be referred to as an RAN. The wireless access network is responsible for functions such as radio resource management, quality of service (QoS) management, data compression and encryption on the air interface side. The wireless access network provides access services for terminals, thereby completing the forwarding of control signals and user data between the terminal and the core network.

For example, the wireless access networks may include, but are not limited to, macro base stations, micro base stations (also known as small stations), radio network controllers (RNCs), Node B (NB), base station controllers (BSCs), base transceiver stations (BTSs), home base stations (e.g., home-evolved Node B, or home Node B, HNB), baseband units (BBUs); and access points (APs), wireless relay nodes, wireless backhaul nodes, transmission points (TPs), or transmission and reception points (TRPs) in Wi-Fi systems. The wireless access networks may also be gNBs or transmission points (TRPs or TPs) in 5G (e.g., NR) systems, one antenna panel or a group of antenna panels (including multiple antenna panels) of a base station in a 5G system, or network nodes constituting gNBs or transmission points, such as baseband units (BBUs), or distributed units (DUs), or base stations in next-generation 6G communication systems. The specific technologies and device forms used in the wireless access network devices are not limited in the embodiments of the present disclosure.

The access network may provide services to cells. Terminals may communicate with the cell via transmission resources (e.g., frequency domain resources, or spectrum resources) allocated by the access network device.

3. AMF: The AMF is mainly responsible for mobility management, access authentication/authorization and other functions of terminals. In addition, the AMF may also be responsible for transmitting user policies between terminals and the PCF.

4. SMF: The SMF is mainly responsible for the protocol data unit (PDU) session management for the terminal, the execution of the control policy issued by the PCF, the selection of the UPF, and the allocation of the IP address of the terminal when the PDU type is the Internet Protocol (IP) type.

5. UPF: As an interface with the data network, the UPF may be configured to complete user plane data forwarding, session/flow-level billing statistics, bandwidth limitation and other functions.

6. PCF: The PCF is mainly responsible for policy control functions such as billing at the session and service flow levels, QoS bandwidth guarantee and mobility management, and terminal policy decision-making.

7. AF: The AF mainly conveys the requirements of the application side to the network side, such as QoS requirements or user state event subscriptions. The AF network element may be a third-party functional entity or an application service deployed by an operator, such as an IP multimedia service (IMS) voice call service. For the application functional entity of a third-party application, it may also be authorized via an NEF when interacting with the core network. For example, the third-party application function directly sends a request message to the NEF, and the NEF determines whether the AF is allowed to send the request message. If the verification is successful, the request message will be forwarded to the corresponding PCF or UDM.

8. UDM: The UDM is mainly responsible for managing subscription data, user access authorization and other functions.

9. UDR: The UDR is mainly responsible for the storage and access functions of subscription data, policy data, application data and other types of data.

10. Data Network (DN): The DN is a service network used to provide data services to users. For example, the DN is the Internet, a third-party service network, an IMS network, or the like. The data network may be identified by a data network name (DNN).

It should be understood that the various network elements or functions shown in FIG. 1, such as AMF, SMF, UPF, PCF, UDM, and the like, may be understood as network elements configured to implement different functions, and may be combined into network slices as needed. These network elements may be independent devices or integrated into the same device to implement different functions. Alternatively, the network elements may also be network elements in hardware devices, software functions running on dedicated hardware, or virtualized functions instantiated on a platform (for example, a cloud platform). The specific forms of the above-mentioned network elements are not limited in the present disclosure.

It should also be understood that the above naming is only defined to facilitate the distinction between different functions and should not constitute any limitation on the present disclosure. The possibility of using other names in 5G networks and other future networks is not precluded in the present disclosure. For example, in a 6G network, some or all of the above-mentioned network elements may use the same terminology as in 5G, or may use other names.

As an example, the functions of interfaces are described as follows.

N1: N1 is the signaling interface between the AMF and the terminal, is access-independent and may be configured to exchange signaling messages between the core network and the terminal, such as registration of the terminal, PDU session establishment of the terminal, and terminal policy configuration at the network side.

N2: N2 is the interface between the AMF and the RAN, which may be configured to transmit radio bearer control information from the core network to the RAN.

N3: N3 is the interface between the (R)AN and the UPF, which may be configured to transfer terminal service data between the RAN and the UPF.

N4: N4 is the interface between the SMF and the UPF, which may be configured to transmit information between the control plane and the user plane, including the issuing of forwarding rules, QoS control rules, traffic statistics rules, and the like from the control plane to the user plane, and the reporting of information by the user plane.

N5: N5 is the interface between the AF and the PCF, which may be configured to issue application service requests and report network events.

N6: N6 is the interface between the UPF and the DN, which may be configured to transfer terminal service data between the UPF and the DN.

N7: N7 is the interface between the PCF and the SMF, which may be configured to issue the PDU session granularity and service data flow granularity control policies.

N8: N8 is the interface between the AMF and the UDM, which may be used by the AMF to obtain access and mobility management related subscription data and authentication data from the UDM, and may be used by the AMF to register terminal current mobility management related information with the UDM.

N9: N9 is the interface between UPFs, such as the interface between the visited-policy control function (V-PCF) and the home-policy control function (H-PCF), or the interface between the UPF connected to the DN and the UPF connected to the RAN, for transferring user plane data between UPFs.

N10: N10 is the interface between the SMF and the UDM, which may be used by the SMF to obtain session management related subscription data from the UDM, and may be used by the SMF to register terminal current session related information with the UDM.

N11: N11 is the interface between the SMF and the AMF, which may be configured to transmit PDU session tunnel information between the RAN and the UPF, transmit control messages sent to the terminal, and transmit radio resource control information sent to the RAN, etc.

N15: N15 is the interface between the PCF and the AMF, which may be configured to issue terminal policies and access control related policies.

N35: N35 is the interface between the UDM and the UDR, which may be used by the UDM to obtain user subscription data information from the UDR.

N36: N36 is the interface between the PCF and the UDR, which may be used by the PCF to obtain policy related subscription data and application data related information from the UDR.

The relationships between other interfaces and various network elements are shown in FIG. 1, which will not be described in detail here for the sake of simplicity.

It should be understood that the names of interfaces between the various network elements in FIG. 1 are just an example. In the actual implementation, the names of interfaces may be other names, which is not specifically limited in the present disclosure. Furthermore, the names of the messages (or signaling) transmitted between the above-mentioned network elements are merely examples and do not constitute any limitation on the functions of the messages themselves.

It should also be understood that the above-mentioned network architecture applied to the embodiments of the present disclosure is only an illustrative description, and the network architecture applicable to the embodiments of the present disclosure is not limited to this. Any network architecture that may realize the functions of the above-mentioned network elements is applicable to the embodiments of the present disclosure.

The embodiments of the present disclosure may be applied to Long Term Evolution (LTE) systems, LTE-Advanced (LTE-A) systems, LTE-Beyond (LTE-B) systems, SUPER 3G systems, International Mobile Telecommunications-Advanced (IMT-Advanced) systems, 4G mobile communication systems, 5G mobile communication systems, 5G new radio (NR) systems, Future Radio Access (FRA) systems, New-Radio Access Technology (RAT) systems, New Radio (NR) systems, New radio access (NX) systems, Future generation radio access (FX) systems, Global System for Mobile communications (GSM), CDMA2000, Ultra Mobile Broadband (UMB) systems, IEEE 802.11 (Wi-Fi), IEEE 802.16 (WiMAX), IEEE 802.20, Ultra-Wideband (UWB), Bluetooth (a registered trademark), PLMN networks, D2D systems, Machine-to-Machine (M2M) systems, IoT systems, V2X systems, systems utilizing other communication methods, next-generation systems built upon them, and the like. In addition, multiple systems may also be combined (for example, a combination of 5G and LTE or LTE-A, or the like) for application.

To facilitate the understanding of the embodiments of the present disclosure, the terms used in the present disclosure will be briefly explained first.

### 1. PIN

The PIN is an intelligent service system centered on individual users, which connects smart devices and other information resources via terminals (such as mobile phones) of users in accordance with agreed protocols to meet the needs of the users for high-quality and convenient life.

The Internet of Things is divided into consumer Internet of Things and industrial Internet of Things based on the demand side and the supply side. Personal Internet of Things networks and home Internet of Things networks are subcategories of the consumer Internet of Things. The relationship between the personal Internet of Things networks and the home Internet of Things networks depends on the role and scenario nature of the IoT end user. When personal IoTs are discussed, the emphasis is placed on mobile scenarios centered on the personal; while when home IoTs are discussed, the emphasis is placed on home space scenarios with low mobility centered on the family user. Personal IoTs are a key mobile connection point in the Internet of Things, connecting home IoTs with industrial IoTs, and are a key foundation for the Internet of Everything.

A PIN consists of PIN elements that communicate using a direct PIN connection or a direct network connection, and is managed locally (using PIN elements with management capability). Examples of PINs include networks for wearable devices and smart home/smart office devices. A PIN element with gateway capability may access 5G network services and communicate with PIN elements that are not in the range of direct PIN connections. The PIN contain at least one PIN element with gateway capability and at least one PIN element with management capability.

### 2. User equipment route selection policy (URSP)

In the 5G mobile communications, terminal related policy information, such as URSP, is introduced. The terminal acts as the executor of the policy and selects a suitable PDU session for the service flow. In other words, certain services have specific requirements for the data networks (DNs), network slices, and session and service continuity mode (SSC) used by PDU sessions. Terminals may use this strategy to determine whether a detected application (APP) may be associated with an established PDU session, whether it may be offloaded to a non-3GPP access outside the PDU session, or whether it may trigger operations such as the establishment of a new PDU session.

The URSP is usually delivered to the terminal based on the following path: PCF->AMF->terminal. Among them, the PCF is the policy control function network element, and the AMF is the access and mobility management function network element.

For example, the PCF may generate the above URSP rules based on the subscription information (whether the slice/DNN requires secondary authentication, whether a certain application requires secondary authentication of the slice/DNN, or the like) or the information reported by the AMF and the SMF (whether the slice/DNN requires secondary authentication, whether a certain application requires secondary authentication of the slice/DNN, or the like), and then send the URSP rules to the AMF.

URSP execution: the URSP is executed by the terminal, which may trigger the establishment or modification of a PDU session. For example, if there is no PDU session that meets the requirements, the terminal will initiate the PDU session establishment process; and if there is a session that meets the requirements, the terminal may directly use the existing PDU session.

The URSP includes one or more URSP rules. A URSP rule mainly consists of two parts: a traffic descriptor and a route selection descriptor. The traffic descriptor includes the names or identifiers of multiple APPs, while the route selection descriptor includes network slice selection information corresponding to each APP, as well as wildcard network slice selection information, such as network slice selection information that APPs not included in the traffic descriptor may use.

In the embodiments of the present disclosure, the first network element does not support generating URST rules for PIN services, which is a problem that urgently needs to be solved.

Based on this, the present disclosure provides a method for generating a rule for a PIN service, where a first network element determines PIN information, where the PIN information includes at least one of a PIN identifier or an external group identifier; and generates a URSP rule for the PIN service according to the PIN information. Therefore, the first network element may generate the URSP rule for the PIN service according to at least one of the PIN identifier or the external group identifier, thus enabling dynamic generation of the URSP rule for the PIN service.

FIG. 2 is a schematic diagram of the interaction flow of a method for generating a rule for a PIN service provided in an embodiment of the present disclosure. As shown in FIG. 2, the present disclosure relates to a method for generating a rule for a PIN service, which is performed by a communication system 100. The method includes the following steps.

At step S21, an AF sends PIN information to a first network element, where the PIN information includes at least one of a PIN identifier or an external group identifier.

In the embodiments of the present disclosure, the AF may send PIN information to the first network element, where the PIN information includes at least one of a PIN identifier or an external group identifier.

The external group identifier is a group of terminal identifiers used outside the 5G system.

In some embodiments, the names of the PIN identifier and the external group identifier are not limited.

In some embodiments, the AF may be an application function in a core network device, or may also be a third-party application function.

In some embodiments, the AF sends the URSP rule for the PIN service to the AF via an NEF.

In some embodiments, the AF sends the PIN information to a UDR.

In some embodiments, the UDR sends the PIN information to the first network element.

In some embodiments, the first network element may be a PCF.

At step S22, the first network element generates a URSP rule for the PIN service according to the PIN information.

At step S23, the first network element sends the URSP rule for the PIN service to the terminal.

In some embodiments, the first network element sends the URSP rule for the PIN service to the terminal via the AMF.

It may be understood that the terminal receives the URSP rule for the PIN service sent by the first network element, and may map the corresponding PIN service to a specific PDU session according to the URSP rule for the PIN service.

At step S24, the first network element sends the URSP rule for the PIN service to the AF.

In some embodiments, the first network element sends the URSP rule for the PIN service to the AF via the NEF.

In an illustrative embodiment, during the service specific parameter provisioning process, the AF may provide service specific parameters to the 5G system via the NEF. The AF may issue requests on behalf of applications not owned by the PLMN serving the UE.

Note 1: In the case of the architecture without common application programming interface framework (CAPIF) support, the AF is locally configured with the application programming interface (API) termination points for the service. In the case of the architecture with CAPIF support, the AF obtains the service API information from the CAPIF core function via the Availability of service APIs event notification or Service Discover Response as specified in TS 23.222 [54].

In some embodiments, the AF request sent to the NEF contains the information as follows.
1. Service Description is the information to identify a service the Service Parameters are applied to. The Service Description in the AF request can be represented by the combination of the data network name (DNN) and single network slice selection assistance information (S-NSSAI), an AF-Service-Identifier or an External Application Identifier. The PIN service contains PIN information, which may include a PIN identifier and/or an external group identifier.
2. Service Parameters are the service specific information which needs to be provisioned in the Network and delivered to the UE in order to support the service identified by the Service Description.

For example, the visited public land mobile network (VPLMN) identifier (ID)(s) that indicates the PLMN(s) where the AF guidance on URSP determination, and all its RSD(s), applies.

3. Target UE(s) or a group of UEs or PLMN ID(s) of inbound roamers.

Target UE(s) or a group of UEs or PLMN ID(s) of inbound roamers indicate the UE(s) who the Service Parameters shall be delivered to. Individual UEs can be identified by a generic public subscription identifier (GPSI), or an IP address/Prefix or a media access control (MAC) address. Groups of UEs are identified by External Group Identifiers as defined in TS 23.682 [23]. If identifiers of target UE(s) or a group of UEs or PLMN ID(s) of inbound roamers are not provided, then the Service Parameters shall be delivered to any UEs of the PLMN of the NEF using the service identified by the Service Description.

4. Subscription to events.

The AF may subscribe to notifications about the outcome of the UE Policies delivery due to service specific parameter provisioning.

In some embodiments, the NEF authorizes the AF request received from the AF and stores the information in the UDR as "Application Data". The Service Parameters are delivered to the targeted UE by the PCF when the UE is reachable.

FIG. 3 shows the procedure for service specific parameter provisioning. The AF uses Nnef_ServiceParameter service to provide the service specific parameters to the PLMN and the UE.
1. To create a new request, the AF invokes an Nnef_ServiceParameter_Create service operation. The request may include subscription information to the report of the outcome of UE Policy delivery.

To update or remove an existing request, the AF invokes an Nnef_ServiceParameter_Update or Nnef_ServiceParameter_ Delete service operation together with the corresponding Transaction Reference ID which was provided to the AF in Nnef_ServiceParameter_ Create response message.

The content of this service operation (AF request) includes the information described in clause 5.2.6.11.

The AF request includes the PIN information for the PIN service, which may include the PIN ID and/or the external group identifier.

2. The AF sends its request to the NEF. The NEF authorizes the AF request. The NEF performs the following mappings:
Map the AF-Service-Identifier into DNN and S-NSSAI combination, determined by local configuration;
Map the External Application Identifier into the corresponding Application Identifier known in the core network.

2a. The NEF may invoke Nudm_SDM_Get service operation to perform the following mappings:
Map the generic public subscription identifier (GPSI) in the Target UE Identifier into the subscription permanent identifier (SUPI), according to information received from the UDM;
Map the External Group Identifier in the Target UE Identifier into the Internal Group Identifier, according to information received from the UDM.

If the AF subscribed to the outcome of UE Policy delivery, the AF indicates where the AF receives the corresponding notifications.

(in the case of Nnef_ServiceParameter_Create): The NEF assigns a Transaction Reference ID to the Nnef_ServiceParameter_Create request.

2b. (in the case of Nnef_ServiceParameter_Create or Update): The NEF may need to authorize the service specific parameter provisioning request with the UDM by sending a Nudm_ServiceSpecificAuthorisation_Create service operation as defined in clause 4.15.6.7a.

NOTE 2: The NEF skips the mapping of GPSI or External Group Identifier in step 2a if it needs to authorize the service specific parameter provisioning request with the UDM as the response of the authorization request from the UDM includes the SUPI or the Internal Group Identifier.

(in the case of Nnef_ServiceParameter_delete): The NEF requests the UDM to remove the authorization of the service specific parameters provisioned by sending a Nudm_ServiceSpecificAuthorisation_Remove service operation.

(in the case of Nnef_ServiceParameter_Create or Update): The NEF stores the AF request information in the UDR as the "Application Data" (Data Subset setting to "Service specific information") together with the assigned Transaction Reference ID.

The PIN service contains PIN information, which may include a PIN ID and/or an external group identifier.

(in the case of Nnef_ServiceParameter_delete): The NEF deletes the AF request information from the UDR.

4. The NEF responds to the AF. In the case of Nnef_ServiceParameter_Create response message, the response message includes the assigned Transaction Reference ID.

If the UE is registered to the network and the PCF performs the subscription to notification to the data modified in the UDR by invoking Nudr_DM_Subscribe (AF service parameter provisioning information, SUPI, Data Set setting to "Application Data", Data Subset setting to "Service specific information") at step 0, the following steps are performed:

5. The PCF(s) receive(s) a Nudr_DM_Notify notification of data change from the UDR.

When the PIN information is included, the UDR will notify changes to the PCF. The PCF generates the URSP rule for the PIN service according to the PIN information (such as the PIN identifier or the external group identifier).

NOTE 3: The PCF does not have to subscribe for each UE the application specific information, e.g., if the PCF has already received the application specific information for a group of UEs or for a DNN by a subscription of other UEs. The same application specific information is delivered to every UE in a group or a DNN.

6. The PCF initiates UE Policy delivery as specified in clause 4.2.4.3.

7. If the AF subscribed to notifications about the outcome of UE Policies delivery due to Service specific parameter provisioning targeting a single UE and the PCF is notified of UE Policy Container from the AMF, the PCF notifies the UE Policy delivery result contained in the UE Policy container as the outcome of the procedure to the NEF by sending Npcf_EventExposure_Notify.

If the PCF is notified about UE Policy delivery failure from the AMF due to UE not reachable, the PCF may determine to retry step 6 of this procedure when the UE becomes reachable. In such a case, the PCF may report the interim status, i.e., the UE is temporarily unreachable as the outcome of the procedure to the NEF by sending Npcf_EventExposoure_Notify.

If the PCF determines the failure of the UE Policies delivery procedure, the PCF notifies the failure with an appropriate cause such as the UE is unreachable as the outcome of the procedure to the NEF by sending Npcf_EventExposure_Notify.

The content of event reporting in this step is described in clause 6.1.3.18 of TS 23.503 [20].

8. When the NEF receives Npcf_EventExposure_Notify, the NEF performs information mapping (e.g., AF Transaction Internal ID provided in Notification Correlation ID to AF Transaction ID, SUPI to GPSI, etc.) and triggers the appropriate NneC_ServiceParameter_Notify message.

The method for generating the rule for the PIN service involved in the embodiments of the present disclosure may include at least one of steps S21 to S24. For example, step S21 may be implemented as an independent embodiment, step S22 may be implemented as an independent embodiment, step S23 may be implemented as an independent embodiment, step S24 may be implemented as an independent embodiment, steps S21+S22 may be implemented as an independent embodiment, and steps S21+S22+S23 may be implemented as an independent embodiment, but it is not limited thereto.

In some embodiments, steps S21, S23, and S24 are optional, and one or more of these steps may be omitted or substituted in different embodiments.

In this implementation or embodiment, unless there is any contradiction, individual steps may be independent, arbitrarily combined or exchanged in order, and the optional implementations or examples may be arbitrarily combined and may be arbitrarily combined with other implementations or examples.

By implementing the embodiments of the present disclosure, the AF sends PIN information to the first network element, where the PIN information includes at least one of a PIN identifier or an external group identifier; the first network element generates a URSP rule for the PIN service according to the PIN information, and sends the URSP rule for the PIN service to the terminal; and the first network element sends the URSP rule for the PIN service to the AF. Therefore, the first network element may generate the URSP rule for the PIN service according to at least one of the PIN identifier or the external group identifier, thus enabling dynamic generation of the URSP rule for the PIN service and the configuration of the URSP rule for the PIN service for the terminal and the AF.

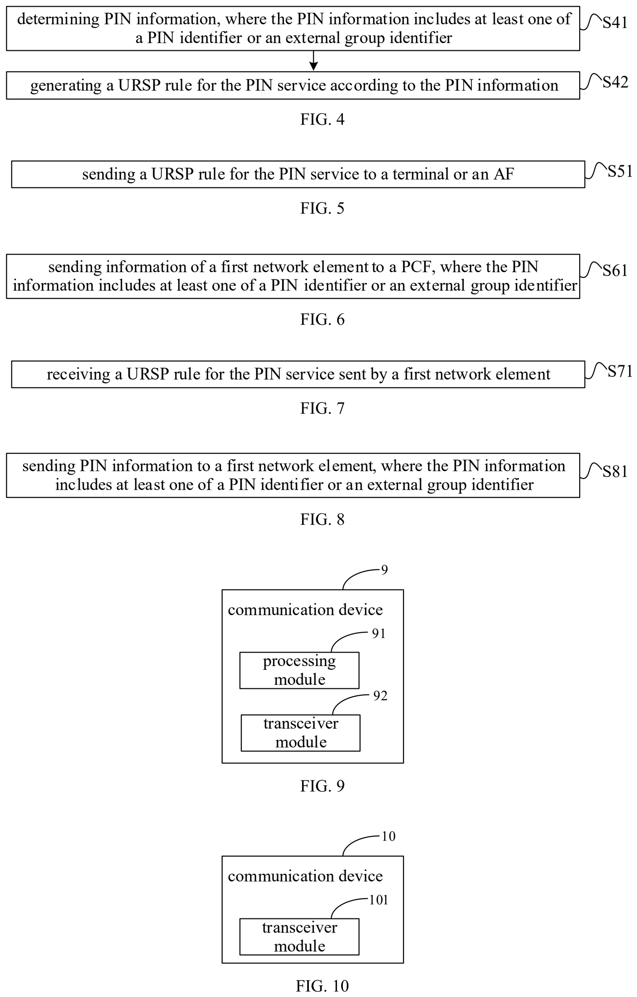

FIG. 4 is a flowchart of another method for generating a rule for a PIN service provided in an embodiment of the present disclosure. As shown in FIG. 4, the embodiments of the present disclosure relate to a method for generating a rule for a PIN service, which is performed by a first network element and includes the following steps.

At step S41, PIN information is determined, where the PIN information includes at least one of a PIN identifier or an external group identifier.

In the embodiments of the present disclosure, the first network element may determine the PIN information. The first network element may be a PCF.

In some embodiments, determining, by the first network element, the PIN information includes at least one of: receiving the PIN information sent by a UDR, or receiving the PIN information sent by an AF.

In an embodiment of the present disclosure, determining, by the first network element, the PIN information includes receiving the PIN information sent by the UDR, thereby determining the PIN information.

In an embodiment of the present disclosure, determining, by the first network element, the PIN information includes receiving the PIN information sent by the AF, thereby determining the PIN information.

In some embodiments, receiving, by the first network element, the PIN information sent by the AF includes receiving the PIN information sent by the AF via an NEF.

In an embodiment of the present disclosure, receiving, by the first network element, the PIN information sent by the AF may be receiving the PIN information sent by the AF via an NEF.

At step S42, a URSP rule for the PIN service is generated according to the PIN information.

In an embodiment of the present disclosure, when the first network element determines the PIN information, it may generate the URSP rule for the PIN service according to the PIN information.

For the detailed descriptions of steps S41 to S42, reference may be made to the relevant descriptions in the above embodiments, which will not be repeated here.

The method for generating the rule for the PIN service involved in the embodiments of the present disclosure may include at least one of steps S41 or S42. For example, step S41 may be implemented as an independent embodiment, step S42 may be implemented as an independent embodiment, and steps S41+S42 may be implemented as an independent embodiment, but it is not limited thereto.

In this implementation or embodiment, unless there is any contradiction, individual steps may be independent, arbitrarily combined or exchanged in order, and the optional implementations or examples may be arbitrarily combined and may be arbitrarily combined with other implementations or examples.

By implementing the embodiments of the present disclosure, the first network element determines PIN information, where the PIN information includes at least one of a PIN identifier or an external group identifier; and generates a URSP rule for the PIN service according to the PIN information. Therefore, the first network element may generate the URSP rule for the PIN service according to at least one of the PIN identifier or the external group identifier, thus enabling dynamic generation of the URSP rule for the PIN service.

FIG. 5 is a flowchart of a method for configuring a rule for a PIN service provided in an embodiment of the present disclosure. As shown in FIG. 5, the embodiments of the present disclosure relate to a method for generating a rule for a PIN service, which is performed by a first network element and includes the following step.

At step S51, a URSP rule for the PIN service is sent to a terminal or an AF.

In an embodiment of the present disclosure, when the first network element generates the URSP rule for the PIN service, it may send the URSP rule for the PIN service to the terminal or AF.

For the relevant descriptions of the method for generating the URSP rule for the PIN service by the first network element, reference may be made to the relevant descriptions in the above embodiments, which will not be repeated here. The first network element may be a PCF.

In some embodiments, sending, by the first network element, the URSP rule for the PIN service to the terminal includes sending the URSP rule for the PIN service to the terminal via an AMF.

In some embodiments, sending, by the first network element, the URSP rule for the PIN service to the AF includes sending the URSP rule for the PIN service to the AF via an NEF.

For the detailed descriptions of step S51, reference may be made to the relevant descriptions in the above embodiments, which will not be repeated here.

In this implementation or embodiment, unless there is any contradiction, individual steps may be independent, arbitrarily combined or exchanged in order, and the optional implementations or examples may be arbitrarily combined and may be arbitrarily combined with other implementations or examples.

By implementing the embodiments of the present disclosure, the first network element sends the URSP rule for the PIN service to the terminal or AF. Therefore, the first network element may generate and configure the URSP rule for the PIN service for the terminal or AF, thus enabling dynamic generation and configuration of the URSP rule for the PIN service.

FIG. 6 is a flowchart of yet another method for generating a rule for a PIN service provided in an embodiment of the present disclosure. As shown in FIG. 6, the embodiments of the present disclosure relate to a method for generating a rule for a PIN service, which is performed by an AF and includes the following step.

At step S61, PIN information is sent to a first network element, where the PIN information includes at least one of a PIN identifier or an external group identifier.

In an embodiment of the present disclosure, the AF may send PIN information to the first network element, where the PIN information includes at least one of a PIN identifier or an external group identifier.

It may be understood that the AF needs to determine the PIN information before sending the PIN information to the first network element, and then sends the determined PIN information to the first network element.

In some embodiments, sending, by the AF, the PIN information to the first network element includes sending the PIN information to the first network element via an NEF.

In some embodiments, the AF sends the PIN information to a UDR.

In an embodiment of the present disclosure, the AF may send the PIN information to the UDR.

For the detailed descriptions of step S61, reference may be made to the relevant descriptions in the above embodiments, which will not be repeated here.

In this implementation or embodiment, unless there is any contradiction, individual steps may be independent, arbitrarily combined or exchanged in order, and the optional implementations or examples may be arbitrarily combined and may be arbitrarily combined with other implementations or examples.

By implementing the embodiments of the present disclosure, the AF sends PIN information to the first network element, where the PIN information includes at least one of a PIN identifier or an external group identifier. Therefore, the AF may send the PIN information to the first network element to generate the URSP rule for the PIN service at the first network element, thus enabling dynamic generation of the URSP rule for the PIN service.

FIG. 7 is a flowchart of another method for configuring a rule for a PIN service provided in an embodiment of the present disclosure. As shown in FIG. 7, the embodiments of the present disclosure relate to a method for generating a rule for a PIN service, which is performed by an AF and includes the following step.

At step S71, a URSP rule for the PIN service sent by a first network element is received.

In an embodiment of the present disclosure, the AF may receive the URSP rule for the PIN service sent by the first network element.

In some embodiments, receiving, by the AF, the URSP rule for the PIN service sent by the first network element includes receiving the URSP rule for the PIN service sent by the first network element via an NEF.

In some embodiments, before receiving the URSP rule for the PIN service sent by the first network element, the AF may send PIN information to the first network element, where the PIN information includes at least one of a PIN identifier or an external group identifier, and the PIN information is used by the first network element to generate the URSP rule for the PIN service.

For the detailed descriptions of sending, by the AF, the PIN information to the first network element, reference may be made to the relevant descriptions in the above embodiments, which will not be repeated here.

For the detailed descriptions of step S71, reference may be made to the relevant descriptions in the above embodiments, which will not be repeated here.

In this implementation or embodiment, unless there is any contradiction, individual steps may be independent, arbitrarily combined or exchanged in order, and the optional implementations or examples may be arbitrarily combined and may be arbitrarily combined with other implementations or examples.

By implementing the embodiments of the present disclosure, the AF receives the URSP rule for the PIN service sent by the first network element. Therefore, the first network element may generate and configure the URSP rule for the PIN service for the AF, thus enabling dynamic generation and configuration of the URSP rule for the PIN service.

FIG. 8 is a flowchart of still another method for generating a rule for a PIN service provided in an embodiment of the present disclosure. As shown in FIG. 8, the embodiments of the present disclosure relates to a method for generating a rule for a PIN service, which is performed by a UDR and includes the following step.

At step S81, PIN information is sent to a first network element, where the PIN information includes at least one of a PIN identifier or an external group identifier.

In an embodiment of the present disclosure, the UDR may send PIN information to the first network element, where the PIN information includes at least one of a PIN identifier or an external group identifier.

It may be understood that the UDR needs to determine the PIN information before sending the PIN information to the first network element, and then sends the determined PIN information to the first network element.

In some embodiments, the UDR receives the PIN information sent by the AF.

In the embodiments of the present disclosure, the UDR may receive the PIN information sent by the AF, and then send the PIN information to the first network element.

For the detailed descriptions of step S81, reference may be made to the relevant descriptions in the above embodiments, which will not be repeated here.

In this implementation or embodiment, unless there is any contradiction, individual steps may be independent, arbitrarily combined or exchanged in order, and the optional implementations or examples may be arbitrarily combined and may be arbitrarily combined with other implementations or examples.

By implementing the embodiments of the present disclosure, the UDR sends PIN information to the first network element, where the PIN information includes at least one of a PIN identifier or an external group identifier. Therefore, the UDR may send the PIN information to the first network element to generate the URSP rule for the PIN service at the first network element, thus enabling dynamic generation of the URSP rule for the PIN service.

To facilitate the understanding of the embodiments of the present disclosure, an illustrative embodiment is provided.

In the illustrative embodiment, the first network element (taking a PCF as the first network element as an example) does not have a solution for generating a URSP rule for a PIN service. The PCF does not support generating the URSP rule for the PIN service. The embodiments of the present disclosure is intended to enable the PCF to generate the URSP rule for the PIN service based on new parameters (e.g., an external group identifier and/or a PIN identifier) provided by the AF.

The AF may provide service specific parameters to the 5G system via an NEF.

The AF may issue requests on behalf of applications not owned by the PLMN serving the UE.

Note 1: In the case of the architecture without CAPIF support, the AF is locally configured with the API termination points for the service. In the case of the architecture with CAPIF support, the AF obtains the service API information from the CAPIF core function via the Availability of service APIs event notification or Service Discover Response as specified in TS 23.222 [54].

The AF request sent to the NEF contains the information as follows.
1. Service Description is the information to identify a service the Service Parameters are applied to. The Service Description in the AF request can be represented by the combination of the DNN and S-NSSAI, an AF-Service-Identifier or an External Application Identifier. The PIN service contains PIN information, which may include a PIN identifier and/or an external group identifier.
2. Service Parameters are the service specific information which needs to be provisioned in the Network and delivered to the UE in order to support the service identified by the Service Description.

The VPLMN ID(s) that indicates the PLMN(s) where the AF guidance on URSP determination, and all its RSD(s), applies.

3. Target UE(s) or a group of UEs or PLMN ID(s) of inbound roamers.

Target UE(s) or a group of UEs or PLMN ID(s) of inbound roamers indicate the UE(s) who the Service Parameters shall be delivered to. Individual UEs can be identified by a GPSI, or an IP address/Prefix or an MAC address. Groups of UEs are identified by External Group Identifiers as defined in TS 23.682 [23]. If identifiers of target UE(s) or a group of UEs or PLMN ID(s) of inbound roamers are not provided, then the Service Parameters shall be delivered to any UEs of the PLMN of the NEF using the service identified by the Service Description.

4. Subscription to events.

The AF may subscribe to notifications about the outcome of the UE Policies delivery due to service specific parameter provisioning.

The NEF authorizes the AF request received from the AF and stores the information in the UDR as "Application Data". The Service Parameters are delivered to the targeted UE by the PCF when the UE is reachable.

The procedure for service specific parameter provisioning is shown in FIG. 3. The AF uses Nnef_ServiceParameter service to provide the service specific parameters to the PLMN and the UE.
1. To create a new request, the AF invokes an Nnef_ServiceParameter_Create service operation. The request may include subscription information to the report of the outcome of UE Policy delivery.

To update or remove an existing request, the AF invokes an Nnef_ServiceParameter_Update or Nnef_ServiceParameter_ Delete service operation together with the corresponding Transaction Reference ID which was provided to the AF in NneC_ServiceParameter_Create response message.

The content of this service operation (AF request) includes the information described in clause 5.2.6.11.

The PIN service includes the PIN information, which may include the PIN ID and/or the external group identifier.

2. The AF sends its request to the NEF. The NEF authorizes the AF request. The NEF performs the following mappings:

Map the AF-Service-Identifier into DNN and S-NSSAI combination, determined by local configuration;

Map the External Application Identifier into the corresponding Application Identifier known in the core network.

2a. The NEF may invoke Nudm_SDM_Get service operation to perform the following mappings:

Map the GPSI in the Target UE Identifier into the SUPI, according to information received from the UDM;

Map the External Group Identifier in the Target UE Identifier into the Internal Group Identifier, according to information received from the UDM.

If the AF subscribed to the outcome of UE Policy delivery, the AF indicates where the AF receives the corresponding notifications.

The NEF assigns a Transaction Reference ID to the Nnef_ServiceParameter_Create request.

2b. (in the case of Nnef_ServiceParameter_Create or Update): The NEF may need to authorize the service specific parameter provisioning request with the UDM by sending a Nudm_ServiceSpecificAuthorisation_Create service operation as defined in clause 4.15.6.7a.

NOTE 2: The NEF skips the mapping of GPSI or External Group Identifier in step 2a if it needs to authorize the service specific parameter provisioning request with the UDM as the response of the authorization request from the UDM includes the SUPI or the Internal Group Identifier.

(in the case of Nnef_ServiceParameter_delete): The NEF requests the UDM to remove the authorization of the service specific parameters provisioned by sending a Nudm_ServiceSpecificAuthorisation_Remove service operation.

3. (in the case of Nnef_ServiceParameter_Create or Update): The NEF stores the AF request information in the UDR as the "Application Data" (Data Subset setting to "Service specific information") together with the assigned Transaction Reference ID.

The PIN service contains PIN information, which may include a PIN ID and/or an external group identifier.

(in the case of Nnef_ServiceParameter_delete): The NEF deletes the AF request information from the UDR.

4. The NEF responds to the AF. In the case of Nnef_ServiceParameter_Create response message, the response message includes the assigned Transaction Reference ID.

If the UE is registered to the network and the PCF performs the subscription to notification to the data modified in the UDR by invoking Nudr_DM_Subscribe (AF service parameter provisioning information, SUPI, Data Set setting to "Application Data", Data Subset setting to "Service specific information") at step 0, the following steps are performed:

5. The PCF(s) receive(s) a Nudr_DM_Notify notification of data change from the UDR.

When the PIN information is included, the UDR will notify changes to the PCF. The PCF generates the URSP rule for the PIN service according to the PIN information (such as the PIN identifier or the external group identifier).

NOTE 3: The PCF does not have to subscribe for each UE the application specific information, e.g., if the PCF has already received the application specific information for a group of UEs or for a DNN by a subscription of other UEs. The same application specific information is delivered to every UE in a group or a DNN.

6. The PCF initiates UE Policy delivery as specified in clause 4.2.4.3.

7. If the AF subscribed to notifications about the outcome of UE Policies delivery due to Service specific parameter provisioning targeting a single UE and the PCF is notified of UE Policy Container from the AMF, the PCF notifies the UE Policy delivery result contained in the UE Policy container as the outcome of the procedure to the NEF by sending Npcf_EventExposure_Notify.

If the PCF is notified about UE Policy delivery failure from the AMF due to UE not reachable, the PCF may determine to retry step 6 of this procedure when the UE becomes reachable. In such a case, the PCF may report the interim status, i.e., the UE is temporarily unreachable as the outcome of the procedure to the NEF by sending Npcf_EventExposoure_Notify.

If the PCF determines the failure of the UE Policies delivery procedure, the PCF notifies the failure with an appropriate cause such as the UE is unreachable as the outcome of the procedure to the NEF by sending Npcf_EventExposure_Notify.

The content of event reporting in this step is described in clause 6.1.3.18 of TS 23.503 [20].

8. When the NEF receives Npcf_EventExposure_Notify, the NEF performs information mapping (e.g., AF Transaction Internal ID provided in Notification Correlation ID to AF Transaction ID, SUPI to GPSI, etc.) and triggers the appropriate NneC_ServiceParameter_ Notify message.

The embodiments of the present disclosure provides a method for generating a URSP rule for a PIN service.

The PCF receives, from a UDR/AF, PIN information, including a PIN identifier and/or an external group identifier. The PCF generates the URSP rule for the PIN service according to the received PIN information.

The embodiments of the present disclosure further provide a device for implementing any one of the above methods. For example, a device is provided, which includes units or modules for implementing steps performed by the terminal in any one of the above methods. For another example, another device is provided, which includes units or modules for implementing steps performed by a network device (such as an access network device, a core network functional node, a core network device, or the like) in any one of the above methods.

It should be understood that the division of the units or modules in the above device is only a logical functional division. In actual implementation, the units or modules may be fully or partially integrated into a physical entity, or may be physically separated. Furthermore, the units or modules in the device may be implemented in the form of calling software by a processor, for example, the device includes a processor, the processor is connected to a memory, the memory has stored therein instructions, and the processor calls the instructions stored in the memory to implement any one of the above methods or to implement the functions of the units or modules of the above device. The processor is, for example, a general-purpose processor, such as a central processing unit (CPU) or a microprocessor, and the memory is either internal to the device or external to the device. Alternatively, the units or modules in the device may be implemented in the form of hardware circuits. The functions of some or all of the units or modules may be achieved by designing the hardware circuits. The above-mentioned hardware circuits may be understood as one or more processors. For example, in an implementation, the above-mentioned hardware circuit is an application-specific integrated circuit (ASIC). The functions of some or all of the above-mentioned units or modules are achieved by designing the logical relationships between the components within the circuit. As another example, in another implementation, the above-mentioned hardware circuit may be implemented by a programmable logic device (PLD). Taking a field programmable gate array (FPGA) as an example, it may include a large number of logic gates. The connection relationships between the logic gates are configured via configuration files, thereby achieving the functions of some or all of the above-mentioned units or modules. All units or modules of the above device may be implemented entirely in the form of calling software by the processor, or entirely by hardware circuits, or partially in the form of calling software by the processor and the rest by hardware circuits.

In the embodiments of the present disclosure, the processor is a circuit with signal processing functions. In an implementation, the processor may be a circuit with instruction reading and running functions, such as a CPU, a microprocessor, a graphics processing unit (GPU) (which may be understood as a microprocessor), or a digital signal processor (DSP). In another implementation, the processor may implement certain functions by means of the logical relationship of hardware circuits. The logical relationship of the above-mentioned hardware circuits is fixed or reconfigurable. For example, the processor is a hardware circuit implemented by an ASIC or a PLD, such as an FPGA. In a reconfigurable hardware circuit, the process of loading, by the processor, a configuration document to implement the hardware circuit configuration may be understood as the process of loading, by the processor, instructions to implement the functions of some or all of the above units or modules. In addition, the processor is may also be a hardware circuit designed for artificial intelligence, which may be understood as ASIC, such as a neural network processing unit (NPU), a tensor processing unit (TPU), a deep learning processing unit (DPU), or the like.

FIG. 9 is a schematic block diagram of a communication device 9 provided in an embodiment of the present disclosure. As shown in FIG. 9, the communication device 9 includes a processing module 91, which is configured to determine PIN information, where the PIN information includes at least one of a PIN identifier or an external group identifier. The processing module is further configured to generate a URSP rule for a PIN service according to the PIN information.

Optionally, the above-mentioned determination module is configured to execute the steps related to "determining PIN information, where the PIN information includes at least one of a PIN identifier or an external group identifier; and generating a URSP rule for the PIN service according to the PIN information" performed by the first network element in any one of the above methods, which will not be repeated here.

In some embodiments, the communication device 9 further includes a transceiver module 92.

The transceiver module 92 is configured to send the URSP rule for the PIN service to the terminal.

In some embodiments, the transceiver module 92 is further configured to send the URSP rule for the PIN service to the terminal via an AMF.

In some embodiments, the transceiver module 92 is further configured to perform at least one of: receiving the PIN information sent by a UDR, or receiving the PIN information sent by an AF.

In some embodiments, the transceiver module 92 is further configured to receive the PIN information sent by the AF via an NEF.

In some embodiments, the transceiver module 92 is further configured to send the URSP rule for the PIN service to the AF.

In some embodiments, the transceiver module 92 is further configured to send the URSP rule for the PIN service to the AF via an NEF.

FIG. 10 is a schematic block diagram of another communication device 10 provided in an embodiment of the present disclosure. As shown in FIG. 10, the communication device 10 includes a transceiver module 101. The transceiver module 101 is configured to send PIN information to a first network element, where the PIN information includes at least one of a PIN identifier or an external group identifier.

Optionally, the above-mentioned transceiver module 101 is configured to execute the step related to "sending PIN information to a first network element, where the PIN information includes at least one of a PIN identifier or an external group identifier" performed by the AF in any one of the above methods, which will not be repeated here.

In some embodiments, the transceiver module 101 is further configured to send the PIN information to the first network element via an NEF.

In some embodiments, the transceiver module 101 is further configured to send the PIN information to a UDR.

In some embodiments, the transceiver module 101 is further configured to receive a URSP rule for the PIN service sent by the first network element.

In some embodiments, the transceiver module 101 is further configured to receive the URSP rule for the PIN service sent by the first network element via an NEF.

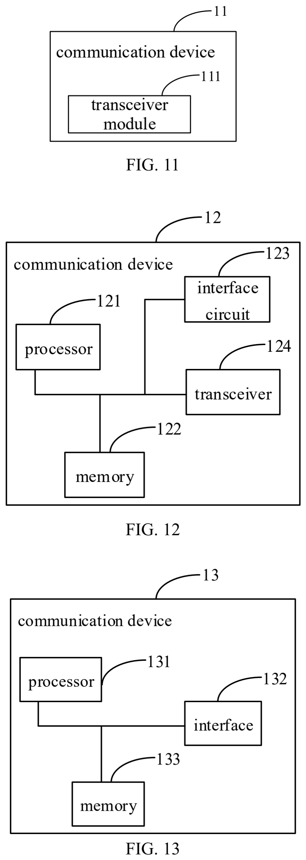

FIG. 11 is a schematic block diagram of yet another communication device 11 provided in an embodiment of the present disclosure. As shown in FIG. 11, the communication device 11 includes a transceiver module 111. The transceiver module 111 is configured to send PIN information to a first network element, where the PIN information includes at least one of a PIN identifier or an external group identifier.

Optionally, the above-mentioned transceiver module 101 is configured to perform the step related to "sending PIN information to a first network element, where the PIN information includes at least one of a PIN identifier or an external group identifier" performed by the UDR in any one of the above methods, which will not be repeated here.

In some embodiments, the transceiver module 101 is further configured to receive the PIN information sent by an AF.

FIG. 12 is a schematic block diagram of still another communication device 12 provided in an embodiment of the present disclosure. The communication device 12 may be a network device (such as an access network device, a core network device, or the like), a terminal (such as a user equipment, or the like), a chip, chip system, or processor that supports a network device to implement any one of the above methods, or a chip, chip system, or processor that supports a terminal to report and implement any one of the above methods. The communication device 12 may be configured to implement the methods as described in the above-mentioned method embodiments. For details, reference may be made to the description in the above-mentioned method embodiments.

As shown in FIG. 12, the communication device 12 includes one or more processors 121. The processor 121 may be a general-purpose processor, a special-purpose processor, or the like. The processor 121 may be, for example, a baseband processor or a central processor. The baseband processor may be configured to process a communication protocol and communication data, and the central processor may be configured to control a communication device (such as a base station, a baseband chip, a terminal, a terminal chip, a distributed unit (DU), a centralized unit (CU), or the like), execute a program, and process data of the program. The processor 121 is configured to call instructions to enable the communication device 12 to execute any one of the above methods.

In some embodiments, the communication device 12 further includes one or more memories 122 for storing instructions. Alternatively, all or some of the memories 122 may be located outside the communication device 12.

In some embodiments, the communication device 12 further includes one or more transceivers 123. When the communication device 12 includes one or more transceivers 123, the communication steps such as sending and receiving steps in the above methods are performed by the transceiver 123, and the other steps are performed by the processor 121.

In some embodiments, the transceiver may include a receiver and a transmitter, and the receiver and the transmitter may be separate or integrated. Optionally, terms such as transceiver, transceiver unit, transceiver device, and transceiver circuit may be used interchangeably; terms such as transmitter, transmitter unit, transmitter device, and transmitter circuit may be used interchangeably; and terms such as receiver, receiver unit, receiver device, and receiver circuit may be used interchangeably.

Optionally, the communication device 12 further includes one or more interface circuits 124, which are connected to the memory 122. The interface circuits 124 may be configured to receive signals from the memory 122 or other devices, and may be configured to send signals to the memory 122 or other devices. For example, the interface circuits 124 may read instructions stored in the memory 122 and send the instructions to the processor 121.

The communication device 12 described in the above embodiments may be a network device or a terminal, but the scope of the communication device 12 described in the present disclosure is not limited thereto, and the structure of the communication device 12 may not be limited to FIG. 12. The communication device 12 may be a standalone device or part of a larger device. For example, the communication device 12 may be (1) a stand-alone integrated circuit (IC), or a chip, or a chip system or subsystem; (2) a set of one or more ICs, in which optionally, the set of ICs may further include a storage component for storing data and programs; (3) an ASIC, such as a modem; (4) a module that may be embedded in other devices; (5) a receiver, a terminal, an intelligent terminal, a cellular phone, a wireless device, a handheld device, a mobile unit, an in-vehicle device, a network device, a cloud device, an artificial intelligence device, or the like; or (6) others.

FIG. 13 is a schematic block diagram of a chip 13 provided in an embodiment of the present disclosure. For the case where the chip 13 may be a chip or a chip system, reference may be made to the block diagram of the chip 13 shown in FIG. 13, but the present disclosure is not limited thereto.

The chip 13 includes one or more processors 131, and the processor 131 is configured to call instructions, so that the chip 13 executes any one of the above methods.

In some embodiments, the chip 13 further includes one or more interface circuits 132, which are connected to the memory 133. The interface circuits 132 may be configured to receive signals from the memory 133 or other devices, and may be configured to send signals to the memory 133 or other devices. For example, the interface circuits 132 may read instructions stored in memory 133 and send the instructions to the processor 131. Optionally, terms such as interface circuit, interface, transceiver pin, and transceiver may be used interchangeably.

In some embodiments, the chip 13 further includes one or more memories 133 for storing instructions. Alternatively, all or some of the memories 133 may be located outside the chip 13.

The present disclosure further provides a storage medium, which has stored therein instructions that, when executed on the communication device 12, cause the communication device 12 to perform any one of the above methods. Optionally, the above-mentioned storage medium is an electronic storage medium. Optionally, the above-mentioned storage medium is a computer-readable storage medium, but is not limited thereto; and the above-mentioned storage medium may also be a storage medium readable by other devices. Optionally, the above storage medium may be a non-transitory storage medium, but is not limited thereto; and the above-mentioned storage medium may also be a transitory storage medium.

The present disclosure further provides a program product that, when executed by the communication device 12, causes the communication device 12 to perform any one of the above methods. Optionally, the above-mentioned program product is a computer program product.

The present disclosure further provides a computer program that, when executed on a computer, causes the computer to perform any one of the above methods.

All or some of the above embodiments may be implemented by software, hardware, firmware or any combination thereof. When implemented using the software, all or some of the above embodiments may be implemented in a form of the computer program product. The computer program product includes one or more computer programs. When the computer program is loaded and executed on the computer, all or some of the processes or functions according to embodiments of the present disclosure will be generated. The computer may be a general-purpose computer, a special-purpose computer, a computer network, or other programmable devices. The computer program may be stored in a computer-readable storage medium, or transmitted from one computer-readable storage medium to another computer-readable storage medium. For example, the computer program may be transmitted from one website, computer, server or data center to another website, computer, server or data center in a wired manner (such as via a coaxial cable, an optical fiber, a digital subscriber line DSL) or a wireless manner (for example, in an infrared, wireless, or microwave manner, or the like). The computer-readable storage medium may be any available medium that may be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc DVD), a semiconductor medium (for example, a solid state disk SSD), or the like.

The corresponding relationships shown in the tables in the present disclosure may be configured or predefined. The values of information in each table are only given by way of example and may be configured as other values, which are not limited in the present disclosure. When configuring the corresponding relationship between the information and each parameter, it is not necessarily required to configure all the corresponding relationships illustrated in each table. For example, in the table in the present disclosure, the corresponding relationships shown in some rows may not be configured. For another example, appropriate adjustments may be made based on the above table, such as splitting, merging, or the like. The names of the parameters shown in the titles of the above tables may also use other names that may be understood by the communication device, and the values or representations of the parameters may also be other values or representations that may be understood by the communication device. When implementing the above tables, other data structures may also be used, such as arrays, queues, containers, stacks, linear lists, pointers, linked lists, trees, graphs, structures, classes, heaps, hash tables or hashed lists.

The term "predefined" in the present disclosure may be understood as defined, predefined, stored, pre-stored, pre-negotiated, pre-configured, solidified, or pre-burned.

Those of ordinary skill in the art will appreciate that the units and algorithm steps of each example described in conjunction with the embodiments of the present disclosure may be implemented in electronic hardware, or a combination of computer software and electronic hardware. Whether these functions are performed in hardware or software depends on the specific application and design constraints of the technical solution. Professional technicians may use different methods to implement the described functions for each specific application, but such an implementation should not be understood as extending beyond the scope of the present disclosure.

Those skilled in the art may clearly understand that, for the convenience and brevity of description, regarding the specific working processes of the systems, devices and units described above, reference may be made to the corresponding processes in the above-mentioned method embodiments, which will not be repeated here.

The above are only specific embodiments of the present disclosure, but the protection scope of the present disclosure is not limited thereto. Any person skilled in the art who is familiar with this technical field may easily think of changes or substitutions within the technical scope defined in the present disclosure, which should be included in the protection scope of the present disclosure. Therefore, the protection scope of the present disclosure should be based on the protection scope of the claims.

## Claims

**1.** A method for generating a rule for a Personal IoT Network (PIN) service, performed by a first network element and comprising:
determining PIN information, wherein the PIN information comprises at least one of a PIN identifier or an external group identifier; and
generating a user equipment route selection policy (URSP) rule for the PIN service according to the PIN information.

**2.** The method according to claim 1, further comprising:
sending the URSP rule for the PIN service to a terminal.

**3.** The method according to claim 2, wherein sending the URSP rule for the PIN service to the terminal comprises:
sending the URSP rule for the PIN service to the terminal via an access and mobility management function (AMF).

**4.** The method according to any one of claims 1 to 3, wherein determining the PIN information comprises at least one of:
receiving the PIN information sent by a unified data repository (UDR); or
receiving the PIN information sent by an application function (AF).

**5.** The method according to claim 4, wherein receiving the PIN information sent by the AF comprises:
receiving the PIN information sent by the AF via a network exposure function (NEF).

**6.** The method according to claim 4 or 5, further comprising:
sending the URSP rule for the PIN service to the AF.

**7.** The method according to claim 6, wherein sending the URSP rule for the PIN service to the AF comprises:
sending the URSP rule for the PIN service to the AF via an NEF.

**8.** A method for generating a rule for a Personal IoT Network (PIN) service, performed by an application function (AF) and comprising:
sending PIN information to a first network element, wherein the PIN information comprises at least one of a PIN identifier or an external group identifier.

**9.** The method according to claim 8, wherein sending the PIN information to the first network element comprises:
sending the PIN information to the first network element via a network exposure function (NEF).

**10.** The method according to claim 8 or 11, further comprising:
sending the PIN information to a unified data repository (UDR).

**11.** The method according to any one of claims 8 to 10, further comprising:
receiving a user equipment route selection policy (URSP) rule for the PIN service sent by the first network element.

**12.** The method according to claim 11, wherein receiving the URSP rule for the PIN service sent by the first network element comprises:
receiving the URSP rule for the PIN service sent by the first network element via an NEF.

**13.** A method for generating a rule for a Personal IoT Network (PIN) service, performed by a unified data repository (UDR) and comprising:
sending PIN information to a first network element, wherein the PIN information comprises at least one of a PIN identifier or an external group identifier.

**14.** The method according to claim 13, further comprising:
receiving the PIN information sent by an application function (AF).

**15.** A communication device, applied to a first network element and comprising:
a processing module configured to determine Personal IoT Network (PIN) information, wherein the PIN information comprises at least one of a PIN identifier or an external group identifier;
wherein the processing module is further configured to generate a user equipment route selection policy (URSP) rule for a PIN service according to the PIN information.

**16.** A communication device, applied to an application function (AF) and comprising:
a transceiver module configured to send Personal IoT Network (PIN) information to a first network element, wherein the PIN information comprises at least one of a PIN identifier or an external group identifier.

**17.** A communication device, applied to a unified data repository (UDR) and comprising:
a transceiver module configured to send Personal IoT Network (PIN) information to a first network element, wherein the PIN information comprises at least one of a PIN identifier or an external group identifier.

**18.** A communication device, comprising:
a processor; and
a memory having stored therein a computer program,
wherein the processor executes the computer program stored in the memory to cause the communication device to perform the method according to any one of claims 1 to 7, or any one of claims 8 to 12, or claim 13 or 14.

**19.** A communication device, comprising:
a processor; and
an interface circuit configured to receive code instructions and transmit the code instructions to the processor,
wherein the processor is configured to run the code instructions to cause the method according to any one of claims 1 to 7, or any one of claims 6 to 7, or claim 13 or 14 to be implemented.

**20.** A computer-readable storage medium for storing instructions that, when executed, cause the method according to any one of claims 1 to 7, or any one of claims 8 to 12, or claim 13 or 14 to be implemented.

**21.** A communication system, comprising:
a first network element configured to perform the method according to any one of claims 1 to 7;
an application function (AF) configured to perform the method according to any one of claims 8 to 12; and
a unified data repository (UDR) configured to perform the method according to claim 13 or 14.

**22.** A method for generating a rule for a Personal IoT Network (PIN) service, comprising:
sending, by an application function (AF) and/or a unified data repository (UDR), PIN information to a first network element; and
determining, by the first network element, the PIN information, and generating, by the first network element, a user equipment route selection policy (URSP) rule for the PIN service according to the PIN information, wherein the PIN information comprises at least one of a PIN identifier or an external group identifier.

**23.** The method according to claim 22, wherein sending, by the AF, the PIN information to the first network element comprises:
sending, by the AF, the PIN information to the first network element via a network exposure function (NEF).

**23.** The method according to claim 22 or 23, further comprising:
sending, by the first network element, the URSP rule for the PIN service to the terminal in a case where the URSP rule for the PIN service is generated.

**24.** The method according to any one of claims 22 to 23, further comprising:
sending, by the first network element, the URSP rule for the PIN service to the AF in a case where the URSP rule for the PIN service is generated.

**25.** The method according to claim 22, wherein sending, by the first network element, the URSP rule for the PIN service to the AF comprises:
sending, by the first network element, the URSP rule for the PIN service to the AF via an NEF.

**26.** The method according to any one of claims 22 to 25, further comprising:
sending, by the AF, the PIN information to the UDR.

**27.** The method according to claim 26, wherein sending, by the UDR, the PIN information to the first network element comprises:
sending, by the UDR, the PIN information to the first network element upon receiving the PIN information sent by the AF.
